# EUROPÄISCHE PATENTSCHRIFT

(11) **EP 4 597 040 B1**
(45) Veröffentlichungstag und Bekanntmachung des Hinweises auf die Patenterteilung: **04.03.2026**
(21) Anmeldenummer: 24154779.3
(22) Anmeldetag: 30.01.2024
(51) Int. Cl.: G01D 5/244

(54) **VORRICHTUNG UND VERFAHREN ZUR POSITIONS-, LÄNGEN- ODER WINKELBESTIMMUNG**
DEVICE AND METHOD FOR DETERMINING POSITION, LENGTH OR ANGLE
DISPOSITIF ET PROCÉDÉ DE DÉTERMINATION DE POSITION, DE LONGUEUR OU D'ANGLE

(43) Veröffentlichungstag der Anmeldung: 06.08.2025
(73) Patentinhaber: SICK AG, 79183 Waldkirch (DE)
(72) Erfinder: Dr. SELLMER, Christian, 78166 Donaueschingen (DE)
(74) Vertreter: Manitz Finsterwald Patent- und Rechtsanwaltspartnerschaft mbB

(56) Entgegenhaltungen:
- EP-A2- 0 833 130
- EP-B1- 1 760 434
- DE-A1- 3 834 591
- US-A1- 2023 116 491

## Beschreibung

Die vorliegende Erfindung betrifft eine Vorrichtung zur Positions-, Längen- oder Winkelbestimmung sowie ein entsprechendes Verfahren. Vergleichbare Vorrichtungen und Verfahren sind beispielsweise aus der US 2023/116491 A1 und aus der EP 1 760 434 B1 bekannt.

Vorrichtungen zur Positions-, Längen- oder Winkelbestimmung, die auch als Encoder bezeichnet werden, sowie entsprechende Verfahren können in einer Vielzahl von technischen Bereichen eingesetzt werden. Beispielsweise können solche Vorrichtungen in Werkzeugmaschinen Verwendung finden, wobei eine Positions- oder Winkelmessung eines Werkzeugs relativ zu dem Werkstück ermöglicht wird. Andere Einsatzbereiche sind Drehwinkelsensoren, beispielsweise für Motor-Feedback-Systeme.

Herkömmlicher Weise umfassen solche Vorrichtungen einen ersten und einen zweiten Teil, welche relativ zueinander bewegbar sind. An dem ersten Teil ist eine Codierung mit einer Vielzahl von Codeabschnitten erster und zweiter Art angebracht. An dem zweiten Teil ist eine Auslesevorrichtung zur Erfassung zumindest eines Teils der Codierung angebracht, wobei die Auslesevorrichtung wenigstens zwei Sensoren umfasst, welche jeweils zur Erfassung der einzelnen Codeabschnitte und zur Ausgabe eines entsprechenden analogen Messsignals ausgebildet sind. Ferner sind wenigstens zwei Analog-Digital-Umsetzer vorgesehen, welche zumindest mittelbar mit den vorgesehenen Sensoren verbunden und dazu ausgebildet sind, die Messsignale zu digitalisieren und auszugeben. Eine weiter vorgesehene Auswert- und Steuereinheit ist dazu ausgebildet, aus den digitalisierten Messsignalen eine Relativposition zwischen dem ersten und dem zweiten Teil zu ermitteln.

Dabei können bereits kleine Fehler bei der Verarbeitung der Messsignale, wie beispielsweise ein Haftfehler ("Stuck-at-Fault") oder ein "Bitflip" (beispielsweise verursacht durch kosmische Strahlung) in einem der vorgesehenen Analog-Digital-Umsetzer, zu einem wesentlichen Fehler bei der Ermittlung der Relativposition führen. Dies gilt insbesondere für Ausgestaltungen, bei welchen eine sehr feine Auflösung der Relativposition notwendig ist.

Vor diesem Hintergrund ist es eine Aufgabe der vorliegenden Erfindung, Vorrichtungen und Verfahren zu präsentieren, welche weniger fehleranfällig sind und eine zuverlässigere genaue Ermittlung der Relativposition zwischen den beiden Teilen ermöglichen.

Diese Aufgabe wird durch Vorrichtungen gemäß Anspruch 1 gelöst. Weiterbildungen dieser sowie ein entsprechendes Verfahren sind den weiteren Ansprüchen zu entnehmen.

Die erfindungsgemäße Vorrichtung zeichnet sich dadurch aus, dass zwischen den Sensoren und den Analog-Digital-Umsetzern wenigstens ein Signaltauscher vorgesehen ist. Dieser ist dazu ausgebildet, die Verteilung der eingehenden Messsignale von den einzelnen Sensoren auf unterschiedliche Ausgänge des Signaltauschers wiederholt zu variieren.

Diese Variation der konkreten Zuordnung von Eingangsanschluss und Ausgangsanschluss an dem wenigstens einen Signaltauscher ermöglicht es, Auswirkungen von Fehlern in denjenigen Komponenten, welche dem bzw. den Signaltauschern nachgeschaltet sind zu minimieren und ggf. zu identifizieren und auszugleichen.

Erfolgt beispielsweise die Variation der Verteilung der Messsignale auf unterschiedliche Analog-Digital-Umsetzer, ist nicht jeder der vorgesehenen Analog-Digital-Umsetzer einem einzelnen festen Sensor zugeordnet, sondern erfolgt die Digitalisierung des Messsignals der Sensoren über jeweils wechselnde Analog-Digital-Umsetzer. Damit wird verhindert, dass das Messsignal eines einzelnen Sensors durch einen Fehler in einem der Analog-Digital-Umsetzer permanent fehlerhaft digitalisiert wird und folglich einen systematischen Fehler in der Ermittlung der Relativposition bewirkt. Vielmehr "wandert" der Fehler zwischen den digitalisierten Messsignalen der Sensoren, wodurch der Fehler erkannt werden kann und/oder wodurch z.B. im Mittel eine genauere Ermittlung der Relativposition ermöglicht werden kann.

Erfindungsgemäß ist die Auswert- und Steuereinheit mit wenigstens einem Signaltauscher verbunden und dazu ausgebildet, die hierdurch vorgenommenen Signalvertauschungen bei der Auswertung der digitalisierten Messsignale zu berücksichtigen und rückgängig zu machen. Ferner ist die Auswert- und Steuereinheit dazu ausgebildet, anhand der digitalisierten Messsignale zu ermitteln, ob und welche der nachgeschalteten Komponenten fehlerhaft ist. Bei Erkennung eines solchen Fehlers gibt die Auswert- und Steuereinheit ein entsprechendes Fehlersignal aus.

Ein entsprechender Fehler kann sich insbesondere in Sprüngen im Verlauf des digitalisierten Messsignals eines der Sensoren äußern, welche mit dem Zeitpunkt der Signalvertauschung zusammenfallen. Auf ein entsprechendes Fehlersignal hin kann beispielsweise ein Austausch des fehlerhaften Analog-Digital-Umsetzers eingeleitet werden, dieser bei der weiteren Digitalisierung nicht mehr berücksichtigt werden oder eine nachgelagerte Korrektur der fehlerhaft digitalisierten Messwerte vorgenommen werden.

Bevorzugt handelt es sich bei der Codierung um eine periodische Codierung, insbesondere um eine Inkrementalcodierung aus sich abwechselnd angeordneten Codeabschnitten erster und zweiter Art.

Messsignale zu solchen Codierungen sind besonders einfach auf systematische und/oder zufällig auftretende Fehler hin zu untersuchen. Auch eine Korrektur erkannter Fehler ist bei solchen Vorrichtungen besonders einfach möglich. Die vorliegende Erfindung ist jedoch auch mit nicht-periodischen Codierungen, wie insbesondere mit Absolutcodierungen kompatibel.

Bevorzugt ist der wenigstens eine Signaltauscher dazu ausgebildet, spätestens jeden zehnten, bevorzugt jeden einzelnen, und insbesondere mehrmals pro Periodendurchlauf eines Messsignals, die Verteilung der Messsignale der einzelnen Sensoren zu variieren.

Während eine besonders langsame Variation der Verteilung weniger aufwendig in der nachgeschalteten Fehleranalyse ist, ermöglicht eine besonders schnelle Variation der Verteilung eine besonders schnelle Identifizierung und Korrektur von Fehlern. Die Variation der Verteilung mit jedem Periodendurchlauf ist ein besonders effizienter Kompromiss zwischen diesen beiden Aspekten.

Bevorzugt sind die Sensoren und die Codierung derart aufeinander abgestimmt, dass die erzeugten Messsignale einem im Wesentlichen Sinus- bzw. Cosinus-förmigen Verlauf folgen.

Hierunter ist insbesondere eine Ausgestaltung zu verstehen, bei welchen die Messsignale jedes der Sensoren bei einer konstanten Relativbewegung zwischen den beiden Teilen im Wesentlichen eine Sinus-Kurve bzw. eine Kosinus-Kurve bilden. Hierfür ist es beispielsweise möglich, eine Codierung vorzusehen, welche einen Sinus- bzw. Kosinus-förmigen Amplitudenverlauf aufweist. Auch ist der Einsatz von Masken mit einem Sinus- bzw. Kosinus-förmigen Transmissionsprofil möglich, welcher über die Codierung oder die Sensoren gelegt sind. Auch sind Sensoren bekannt, deren Empfindlichkeit derart modifiziert ist, dass sich beispielsweise aus einer blockartigen Inkrementalcodierung ein Sinus- oder Kosinus-förmiger Verlauf für das Messsignal ergibt. Entsprechende Messsignale sind besonders einfach auszuwerten und hinsichtlich auftretender Fehler auszuwerten.

Bevorzugt ist die Vorrichtung derart ausgebildet, dass wenigstens einer, insbesondere alle, der Signaltauscher lediglich die Verteilung der Messsignale von Sensoren variiert, deren Messwerte, bis auf einzelne Ausnahmen, voneinander verschieden sind.

Damit werden effektiv den nachgeordneten Komponenten lediglich Messsignale übermittelt, welche bis auf wenige Kreuzungspunkte voneinander verschieden sind. Dies erleichtert die Auswertung der digitalisierten Messsignale.

Insbesondere ist die Vorrichtung derart ausgebildet, dass der besagte Signaltauscher lediglich periodische Signale miteinander vertauscht, zwischen welchen lediglich ein Phasenversatz, insbesondere von 30°, 45°, 90°, 120° oder bevorzugt von 180°, besteht.

Mit anderen Worten, es werden lediglich identische (d.h. insbesondere gleiche Amplitude, gleiche Periodenlänge und gleicher Verlauf) periodische Messsignale miteinander vertauscht. Solche Messsignale haben ein Minimum an Kreuzungspunkten. Die aufgezählten Beispiele des Phasenversatzes sind besonders einfach auszuwerten. Hierbei sei darauf hingewiesen, dass ein Phasenversatz von 90° der Beziehung zwischen einer Sinuskurve ("PSIN" für eine Standard-Sinuskurve oder "NSIN" für eine invertierte Sinuskurve) und einer Kosinuskurve ("PCOS" für eine Standard-Kosinuskurve bzw. "NCOS" für eine invertierte Kosinuskurve) entspricht, während ein Phasenversatz von 180° der Beziehung zwischen zwei Sinuskurven mit gegensätzlichen Vorzeichen (also "PSIN" und "NSIN") oder zwischen zwei Kosinus mit gegensätzlichen Vorzeichen (also "PCOS" und "NCOS") entspricht.

Bevorzugt ist zwischen wenigstens einem Paar von Sensoren und wenigstens einem der nachfolgenden Signaltauscher eine Differenzschaltung vorgesehen.

Eine solche Differenzschaltung gibt als Ausgangssignal eine Differenz der beiden Eingangssignale aus. Ein solches Differenzsignal ermöglicht eine dem Signaltauscher vorgeschaltete Vorverarbeitung der Messsignale, welche zu einer Reduktion der zu digitalisierenden Messsignale führt.

Alternativ oder ergänzend dazu kann zwischen wenigstens einem Signaltauscher und wenigstens einem der nachfolgenden Analog-Digital-Umsetzer eine solche Differenzschaltung vorgesehen sein.

Separate Signaltauscher den Differenzschaltungen voranzustellen ermöglicht auch eine Fehleranalyse und ggf. Korrektur in den Differenzschaltungen. Ferner resultiert natürlich auch die nachgeschaltete Differenzbildung in einer Reduktion der zu digitalisierenden Messsignale.

Bevorzugt handelt es sich bei wenigstens einem, insbesondere bei allen, der besagten Signaltauscher um Multiplexer oder Koppelfelder.

Derartige Signaltauscher sind besonders zuverlässig bzw. unanfällig gegenüber Störungen.

Bevorzugt ist wenigstens einer, insbesondere alle, der besagten Signaltauscher zum wiederholten Vertauschen von genau zwei oder vier Signalen ausgebildet.

Derartige Ausgestaltungen sind relativ einfach und günstig umzusetzen und reichen dennoch zur Umsetzung des Erfindungsgedankens aus.

Bevorzugt ist die Auswert- und Steuereinheit mit wenigstens einem Signaltauscher verbunden und dazu ausgebildet ist, kontinuierlich den Betrieb des wenigstens einen Signaltauschers zu steuern.

Dies erlaubt eine reaktive Steuerung des jeweiligen Signaltauschers und damit eine besonders effiziente Nutzung des Signaltauschers. Beispielsweise kann die Auswert- und Steuereinheit dazu ausgebildet sein, die Frequenz der Variation der Verteilung der Messsignale zu ändern und/oder auf bestimmte Situationen, wie auf eine Benutzereingabe oder auf eine Überschreitung eines bestimmten Messwerts hin, eine Variation der Verteilung vornehmen zu lassen.

Bevorzugt ist wenigstens eine Abtast-Halte-Schaltung vorgesehen und derart ausgestaltet, dass ein Signaltauscher jeden zu verteilenden Messwert an wenigstens zwei unterschiedliche Digital-Analog-Umsetzer ausgeben kann. Insbesondere ist wenigstens eine Abtast-Halte-Schaltung dem entsprechenden Signaltauscher vorgeschaltet oder in diesen integriert.

Dies ermöglicht es, identische Messwerte durch wenigstens zwei unterschiedliche Digital-Analog-Umsetzer digitalisieren zu lassen und die digitalisieren Messwerte unmittelbar miteinander zu vergleichen. Bei wesentlichen Diskrepanzen zwischen diesen kann dann auf einen Fehler geschlossen werden. Während die Integration der Abtast-Halte-Schaltung in den Signaltauscher besonders platzsparend ist, ermöglicht eine separate Vorsehung dessen eine freiere und effiziente Gesamtausgestaltung der Vorrichtung.

Bevorzugt ist die Vorrichtung derart ausgebildet, dass wenigstens einer, insbesondere alle, der besagten Signaltauscher die Verteilung der Messsignale bei einer festen vorgegebenen Frequenz, auf separate Anforderung hin und/oder automatisch als Reaktion auf die Erkennung bestimmter Randbedingungen hin variieren.

Eine separate Anforderung kann unter anderem eine manuelle Eingabe eines Benutzers sein. Die Erkennung einer bestimmten Randbedingung kann beispielsweise die Überschreitung eines Grenzwerts für eine überwachte Temperatur (beispielsweise eines Motors, welcher mit der Vorrichtung gekoppelt ist) sein. Eine Kombination dieser Möglichkeiten ermöglicht eine besonders umfassende und vielseitige Variation der Verteilung der Messsignale und damit eine besonders schnelle und zuverlässige Identifizierung und ggf. Korrektur von Fehlern bei der Verarbeitung der Messsignale.

Bevorzugt handelt es sich bei den Sensoren um optische, kapazitive, induktive oder magnetische Sensoren.

Sie ermöglichen jeweils eine besonders zuverlässige und/oder genaue Ermittlung der Relativposition zwischen den beiden Teilen.

Bevorzugt sind die vorgesehenen Sensoren, Signaltauscher und/oder Digital-Analog-Umsetzer, sowie insbesondere auch die Auswert- und Steuereinheit, auf einem einzelnen integrierten Schaltkreis vorgesehen.

Eine derartige Ausgestaltung ist besonders kompakt und gut in größere Systeme, wie beispielsweise Antriebssysteme, integrierbar.

Ein erfindungsgemäßes Verfahren zur Positions-, Längen- oder Winkelbestimmung zeichnet sich gegenüber bekannten Verfahren aus durch: die wiederholte Variation der Verteilung von eingehenden Messsignalen auf unterschiedliche Ausgänge eines Signaltauschers; die Berücksichtigung der vorgenommenen Variation der Signalverteilung und die Rückgängigmachung dieser bei der Auswertung der digitalisierten Messsignale; die Ermittlung ob und welche der nachgeschalteten Komponenten fehlerhaft ist anhand der digitalisierten Messsignale; und die Ausgabe eines entsprechenden Fehlersignals.

Wie bereits oben dargelegt wurde, ermöglicht dies eine zuverlässigere und genauere Ermittlung der Relativposition sowie insbesondere auch die Identifizierung und ggf. Korrektur von Fehlern bei der Verarbeitung der Messsignale.

Im Übrigen gelten die Aussagen zu der erfindungsgemäßen Vorrichtung für das erfindungsgemäße Verfahren entsprechend, dies gilt insbesondere hinsichtlich Vorteilen und Ausführungsformen. Ebenso versteht es sich, dass sämtliche hierin genannten Merkmale miteinander kombinierbar sind, sofern nicht explizit etwas Gegenteiliges angegeben ist.

Nachfolgend wird die Erfindung rein beispielhaft unter Bezugnahme auf die Zeichnungen beschrieben. Es zeigt:
- Fig. 1: eine schematische Ansicht eines beispielhaften Grundaufbaus einer Vorrichtung zur Positions- oder Längenbestimmung gemäß dem Stand der Technik;
- Fig. 2A: schematisch ein erstes Beispiel zur erfindungsgemäßen Weiterbildung der Vorrichtung aus Fig. 1;
- Fig. 2B: schematisch die Wirkung einer erfindungsgemäßen Variation der Verteilung der Messsignale in der Ausgestaltung der Fig. 2A;
- Fig. 3: ein zweites Beispiel zur erfindungsgemäßen Weiterbildung der Vorrichtung aus Fig. 1;
- Fig. 4A: schematisch ein drittes Beispiel zur erfindungsgemäßen Weiterbildung der Vorrichtung aus Fig. 1;
- Fig. 4B: schematisch die Wirkung einer erfindungsgemäßen Variation der Verteilung der Messsignale in der Ausgestaltung der Fig. 4A;
- Fig. 5A: schematisch ein viertes Beispiel zur erfindungsgemäßen Weiterbildung der Vorrichtung aus Fig. 1;
- Fig. 5B: schematisch die Wirkung einer erfindungsgemäßen Variation der Verteilung der Messsignale in der Ausgestaltung der Fig. 5A;
- Fig. 6: schematisch eine erste funktionale Weiterbildung der Ausgestaltung der Fig. 3;
- Fig. 7: schematisch eine zweite funktionale Weiterbildung der Ausgestaltung der Fig. 3; und
- Fig. 8: schematisch eine dritte funktionale Weiterbildung der Ausgestaltung der Fig. 3.

In den Figuren bezeichnen gleiche Bezugszeichen gleiche oder zumindest entsprechende Merkmale.

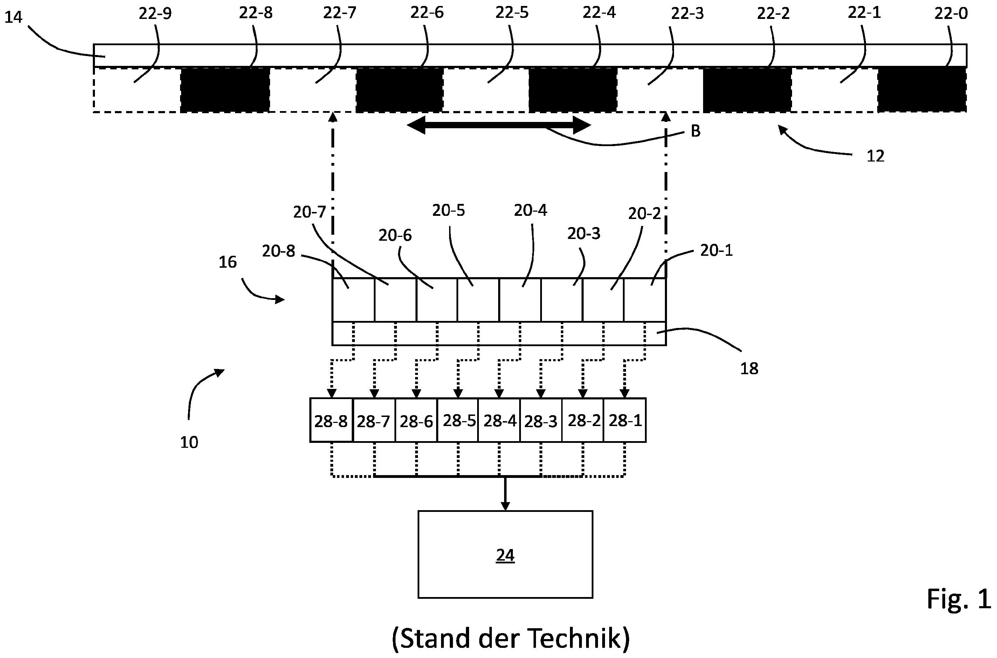

Fig. 1 zeigt schematisch den bekannten Grundaufbau einer Vorrichtung 10 zur Positions- oder Längenbestimmung. Die gezeigte Vorrichtung 10 dient als Encoder, beispielsweise in einem Motor-Feedback-System (nicht gezeigt).

Die Vorrichtung 10 umfasst einen ersten Teil 14, an welchem eine Codierung 12, vorliegend in Gestalt einer Inkrementalcodierung, angebracht ist. Die Vorrichtung 10 umfasst ferner einen zweiten Teil 18, an welchem eine Auslesevorrichtung 16 angebracht ist. Die Codierung 12 und die Auslesevorrichtung 16 sind an dem ersten Teil 14 und an dem zweiten Teil 18 derart befestigt, dass sie sich gemeinsam mit den beiden Teilen 14 und 18 relativ zueinander bewegen. Der erste Teil 14 und der zweite Teil 18 - und damit die Codierung 12 sowie die Auslesevorrichtung 16 - sind im vorliegenden Beispiel rein translatorisch relativ zueinander bewegbar (siehe den Doppelpfeil B). Rein rotatorische Relativbewegungen sind für einen Fachmann auch ohne weiteres umzusetzen.

Die Codierung 12 ist durch eine Vielzahl sich abwechselnder Codeabschnitte 22-0 bis 22-9 erster Art (weiß dargestellt) und zweiter Art (schwarz dargestellt) gebildet. Alternativ zu der vorliegend gezeigten Inkrementalcodierung wäre auch eine andersartige Codierung, wie insbesondere eine Absolutcodierung möglich. In Fig. 1 sind lediglich zehn Codeabschnitte 22-0 bis 22-9 abgebildet. Die Codierung 12 kann zu den abgebildeten Codeabschnitten 22-0 bis 22-9 links und/oder rechts noch weitere Codeabschnitte umfassen. Dies würde eine Bestimmung der Relativposition zwischen den beiden Teilen 14 und 18 über einen größeren Bereich hinweg ermöglichen, als dies mit den abgebildeten zehn Codeabschnitten 22-0 bis 22-9 möglich ist.

Die Auslesevorrichtung 16 umfasst vorliegend acht Sensoren 20-1 bis 20-8, beispielsweise in Gestalt von Photodioden, wobei die Sensoren 20-1 bis 20-8 parallel zur Codierung 12 nebeneinander angeordnet sind. Die Sensoren 20-1 bis 20-8 sind auf die Codierung 12 ausgerichtet und zur Erfassung der unterschiedlichen Codeabschnitte 22-0 bis 22-9 der Codierung 12 ausgebildet.

Für eine gleichmäßige Beleuchtung der Codeabschnitte 22-0 bis 22-9 kann eine Lichtquelle (nicht gezeigt) vorgesehen sein, welche zumindest diejenigen Codeabschnitte 22-0 bis 22-9 beleuchtet, welche im Erfassungsbereich der Sensoren 20-1 bis 20-8 (der Bereich zwischen den beiden gestrichelt-doppelgepunkteten Pfeilen) liegen. Jeder der Sensoren 20-1 bis 20-8 empfängt - je nach Art der Codeabschnitte 22-0 bis 22-9 in dessen Erfassungsbereich - eine bestimmte Menge von durch die jeweiligen Codeabschnitte 22-0 bis 22-9 reflektierten oder transmittierten Licht. Die Sensoren 20-1 bis 20-8 geben daraufhin einen entsprechenden Messwert aus, beispielsweise in Gestalt eines Spannungs- oder Stromwerts. Der zeitliche Verlauf der Messwerte liefert das Messsignal des jeweiligen Sensors 20-1 bis 20-8.

Zur erleichterten Auswertung der Messwerte bzw. Messsignale der Sensoren 20-1 bis 20-8 sind die Codeabschnitte 22-0 bis 22-9 jeweils räumlich identisch zueinander ausgebildet. Vorliegend wird angenommen, dass der Erfassungsbereich jedes Sensors 20-1 bis 20-8 halb so breit ist, wie die einzelnen Codeabschnitte 22-0 bis 22-9 lang sind. Die Sensoren 20-1 bis 20-8 sind derart auf die Codierung 12 ausgerichtet, dass sie einen zusammenhängenden Erfassungsbereich (siehe den Bereich zwischen den gestrichelt-doppelgepunktet Pfeilen in Fig. 1) auf der Codierung 12 abbilden, welcher in seiner Länge gerade der Länge eines Codeworts der Codierung 12 entspricht. Mit anderen Worten, jeder Codeabschnitt 22-4 bis 22-6, welcher vollkommen im Erfassungsbereich der Sensoren 20-1 bis 20-8 liegt, befindet sich im Erfassungsbereich von zumindest zwei, insbesondere drei, benachbarten Sensoren 20-1 bis 20-8. Dies ermöglicht eine besonders feine Abtastung der Codierung 12 und damit eine besonders genaue Auflösung der Relativposition zwischen dem ersten Teil 14 und dem zweiten Teil 18.

Jedem der Sensoren 20-1 bis 20-8 ist ein eigener Analog-Digital-Umsetzer 28-1 bis 28-8 nachgeschaltet, welcher dazu ausgebildet ist, das Messsignal des zugehörigen Sensors 20-1 bis 20-8 zu digitalisieren und an eine gemeinsame Auswert- und Steuereinheit 24 auszugeben. Auch können mehrere der Sensoren 20-1 bis 20-8 der gleichen Phase mit einem einzelnen gemeinsamen Analog-Digital-Umsetzer 28-1 bis 28-8 verbunden sein.

Die Auswert- und Steuereinheit 24 ist schließlich dazu ausgebildet, anhand der digitalisierten Messsignale auf bekannte Art und Weise die Relativposition zwischen dem ersten Teil 14 und dem zweiten Teil 18 zu ermitteln.

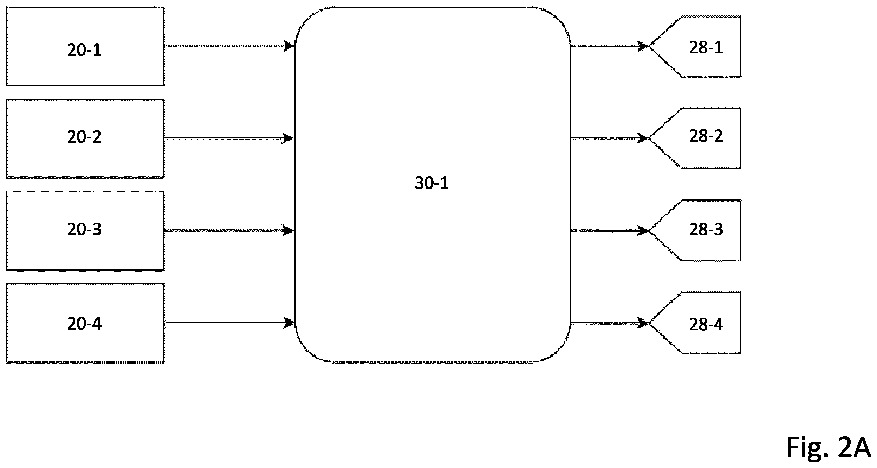

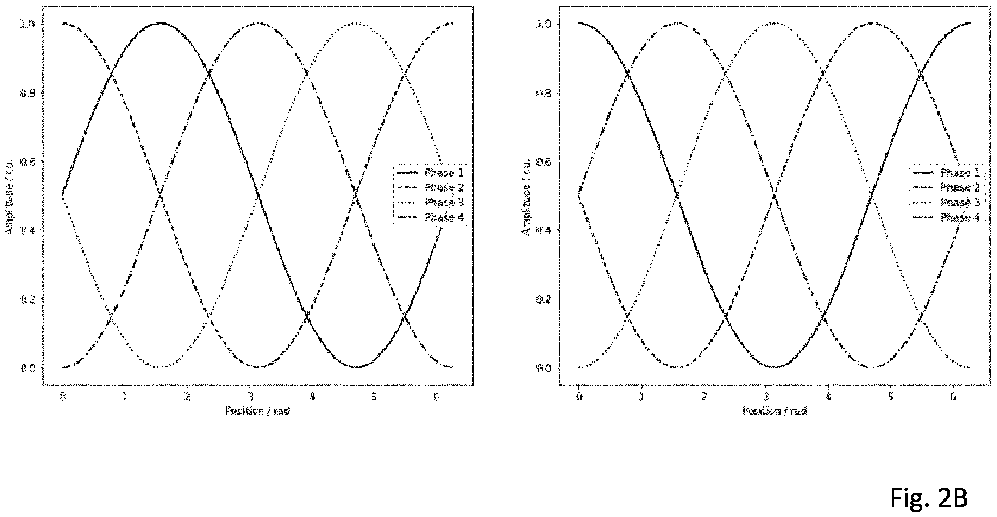

Wie in den Beispielen der weiteren Figuren 2 bis 8 zumindest schematisch dargestellt ist, sieht die vorliegende Erfindung den Einsatz wenigstens eines Signaltauschers 30-1 bzw. 30-2 vor, um die Verteilung der Messsignale von den Sensoren 20-1 bis 20-8 auf nachgeschaltete Komponenten der Vorrichtung 10 zu variieren.

Entsprechend dem Beispiel aus Fig. 2A kann ein einzelner Signaltauscher 30-1 eingangsseitig mit beispielsweise vier (ggf. auch mehr oder weniger) Sensoren 20-1 bis 20-4 und ausgangsseitig mit entsprechend vielen (ggf. auch mit mehr oder weniger) Analog-Digital-Umsetzern 28-1 bis 28-4 verbunden sein. Der Signaltauscher 30-1 ist dazu ausgebildet, in einem bestimmten Muster und/oder auf ein spezielles Signal hin, die Verteilung der Messsignale von den Sensoren 20-1 bis 20-4 auf die Analog-Digital-Umsetzer 28-1 bis 28-4 zu variieren. Hierbei erhält im vorliegenden Beispiel bevorzugt jeder der Analog-Digital-Umsetzer 28-1 bis 28-4 zu jedem Zeitpunkt das Messsignal eines der Sensoren 20-1 bis 20-4. Bevorzugt stehen dabei die Messsignale der Sensoren 20-1 bis 20-4 in einer bestimmten vordefinierten Phasenbeziehung zueinander.

Im vorliegenden Fall würde sich beispielsweise bei Sinus-förmigen Messsignalen der unterschiedlichen Sensoren 20-1 bis 20-4 bei einer gleichförmigen Relativbewegung zwischen den beiden Teilen 14 und 18 ein Phasenversatz von jeweils 90° zwischen zwei benachbarten Sensoren ergeben. Angenommen der erste Sensor 20-1 würde ein Sinus-Signal (PSIN - für "positiv Sinus-förmig") ausgeben, würde dies bedeuten, dass der zweite Sensor 20-2 ein Kosinus-Signal (PCOS - für "positiv Kosinus-förmig"), der dritte Sensor 20-3 ein invertiertes Sinus-Signal (NSIN - für "negativ Sinus-förmig") und der vierte Sensor 20-4 ein invertiertes Kosinus-Signal (NCOS - für "negativ Kosinus-förmig) ausgibt.

In Fig. 2B ist beispielsweise die Verteilung der Messsignale des Sensoren 20-1 bis 20-4 auf die unterschiedlichen Analog-Digital-Umsetzer 28-1 bis 28-4 (angezeigt durch die Linienart der jeweiligen Signalkurven) für eine erste Verteilung (auf der linken Seite) und für eine zweite von der ersten Verteilung variierten Verteilung (auf der rechten Seite) dargestellt. Zwischen den beiden dargestellten Verteilungen erfolgte eine rollierende Variation der Verteilung. Mit anderen Worten, im links dargestellten Beispiel wird durch den Signaltauscher 30-1 das Messsignal des ersten Sensors 20-1 an den ersten Analog-Digital-Umsetzer 28-1, das Messsignal des zweiten Sensors 20-2 an den zweiten Analog-Digital-Umsetzer 28-2, das Messsignal des dritten Sensors 20-3 an den dritten Analog-Digital-Umsetzer 28-3 und das Messsignal des vierten Sensors 20-4 an den vierten Analog-Digital-Umsetzer 28-4 weitergeleitet. Im rechts dargestellten Beispiel wird durch den Signaltauscher 30-1 das Messsignal des ersten Sensors 20-1 an den zweiten Analog-Digital-Umsetzer 28-2, das Messsignal des zweiten Sensors 20-2 an den dritten Analog-Digital-Umsetzer 28-3, das Messsignal des dritten Sensors 20-3 an den vierten Analog-Digital-Umsetzer 28-4 und das Messsignal des vierten Sensors 20-4 an den ersten Analog-Digital-Umsetzer 28-1 weitergeleitet.

Falls einer der Analog-Digital-Umsetzer 28-1 bis 28-4 einen Fehler aufweisen sollte, führt die Variation der Verteilung dazu, dass nicht das Messsignal eines einzelnen der Sensoren 20-1 bis 20-4 durchwegs fehlerhaft digitalisiert wird, sondern der Fehler zwischen den Messsignalen der Sensoren 20-1 bis 20-4 "durchgeschaltet" wird. Dies ermöglicht es den Fehler zu "verwischen" und im Mittel in seinen Auswirkungen auf die Ermittlung der Relativposition zu reduzieren. Ergänzend dazu kann damit auch einfach ermittelt werden, ob ein identifizierter Fehler einem der Sensoren 20-1 bis 20-4 oder einem der Analog-Digital-Umsetzer 28-1 bis 28-4 zuzuordnen ist. In Reaktion hierauf können dann gezielt entsprechende Gegenmaßnahmen erfolgen, wie ein Austausch der fehlerhaften Komponente oder eine rechnerische nachgelagerte Korrektur der digitalisierten Messwerte. Auch ist es möglich, zumindest vorübergehend, die digitalisierten Messwerte einer als fehlerhaft identifizierten Komponente nicht bei der Ermittlung der Relativposition zu berücksichtigen. Hierfür kann insbesondere auch eine Umleitung von zu digitalisierenden Messwerten auf einen vorgesehenen und mit dem Signaltauscher 30-1 verbundenen Ersatz-Analog-Digital-Umsetzers (nicht dargestellt) erfolgen.

Die Variation der Verteilung der Messsignale auf die einzelnen Analog-Digital-Umsetzer 28-1 bis 28-4 ist natürlich vor der Ermittlung der Relativposition auszugleichen bzw. rückgängig zu machen oder bei dieser zu berücksichtigen. Hierfür kann ein weiterer Signaltauscher (nicht dargestellt) vorgesehen sein, welcher eingangsseitig mit den Ausgängen der Analog-Digital-Umsetzer 28-1 bis 28-4 und ausgangsseitig mit separaten Signaleingängen der Auswert- und Steuereinheit 24 gekoppelt ist. Dieser weitere Signaltauscher kann dann die vorangegangene Variation der Signalverteilung rückgängig machen, sodass das Messsignal jedes der Sensoren 20-1 bis 20-4 durchwegs einem festen Signaleingang an der Auswert- und Steuereinheit 24 zugeführt wird. Eine solche Umkehr bzw. Rückrechnung der Variation der Signalverteilung kann natürlich auch rein digital, bevorzugt unmittelbar in der Auswert- und Steuereinheit 24 erfolgen.

Anhand der "wieder zusammengesetzten" nun digitalisierten Messsignale ist relativ einfach zu erkennen, ob einer der Sensoren 20-1 bis 20-4 oder der Analog-Digital-Umsetzer 28-1 bis 28-4 einen Fehler aufweist. Fehler in einem der Analog-Digital-Umsetzer 28-1 bis 28-2 zeigen sich beispielsweise in Sprüngen und/oder stufen (nicht dargestellt) in den digitalisierten Messsignalen zu den Zeitpunkten der Variation der Verteilung auf die unterschiedlichen Analog-Digital-Umsetzer 28-1 bis 28-4. Fehler in einem der Sensoren 20-1 und 20-4 sind von dem Zeitpunkt der Variation der Verteilung der Messsignale unabhängig.

Die Auswert- und Steuereinheit 24 ist bevorzugt dazu ausgebildet, die digitalisierten Messsignale vor der Ermittlung der Relativposition auf Abweichungen von einem erwarteten Verhalten hin zu überprüfen und zu ermitteln, ob diese Abweichungen auf einen fehlerhaften Sensor 20-1 bis 20-4 oder Analog-Digital-Umsetzer 28-1 bis 28-4 hinweisen. Das Ergebnis dieser Überprüfung kann dann die Ausgabe eines entsprechenden Fehlersignals bewirken und/oder eine Änderung der Vorgehensweise bei der Ermittlung der Relativposition (beispielsweise durch Vernachlässigung der digitalisierten Messwerte des als fehlerhaft erkannten Sensors bzw. Analog-Digital-Umsetzers, oder durch Korrektur der digitalisierten Messwerte des als fehlerhaft erkannten Sensors oder Analog-Digital-Umsetzers).

Die Variation der Verteilung durch den Signaltauscher 30-1 kann nach einem festen Muster erfolgen, insbesondere mit einer vorgegebenen Frequenz erfolgen, welche von einer Frequenz der periodischen Messsignale abhängig ist.

Anstatt der Variation der Verteilung der Messsignale von vier Sensoren 20-1 bis 20-4 auf vier Analog-Digital-Umsetzer 28-1 bis 28-4 ist auch die Variation der Verteilung von mehr oder weniger Sensoren auf vier, mehr oder weniger Analog-Digital-Umsetzer möglich. Beispielsweise kann jeweils lediglich die Verteilung von Messsignalen von zwei der Sensoren 20-1 bis 20-2 auf zwei der Analog-Digital-Umsetzer 28-1 bis 28-8 mittels eines entsprechenden Signaltauschers erfolgen. Auch ist es möglich, einen Überschuss an Analog-Digital-Umsetzern vorzusehen, um bei Fehlfunktion eines der Analog-Digital-Umsetzer noch Ausweichkapazitäten zur Digitalisierung der Messsignale zu haben.

Auch können weniger Analog-Digital-Umsetzer 28-1 bis 28-8 als Sensoren 20-1 bis 20-8 vorgesehen sein, wenn Messsignale mehrerer, insbesondere jeweils zweier Sensoren 20-1 bis 20-8, miteinander kombiniert werden, bevor deren Digitalisierung erfolgt.

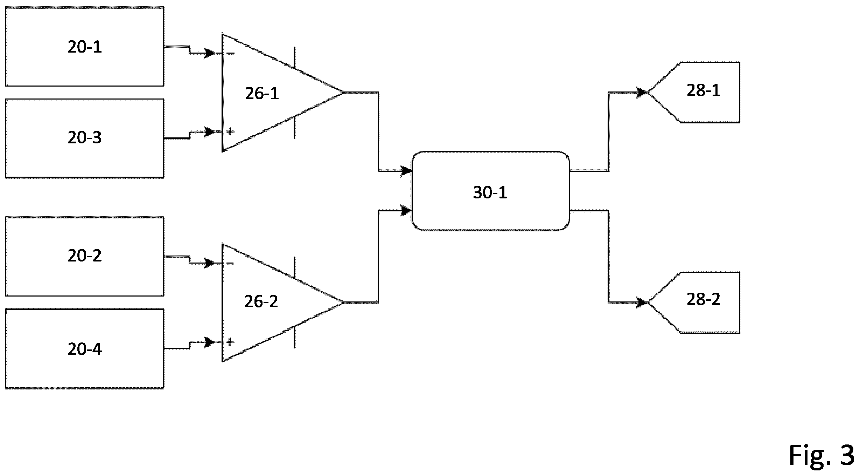

Ein solcher Fall ist beispielsweise in Fig. 3 dargestellt. Hier sind für vier Sensoren 20-1 bis 20-4 lediglich zwei Analog-Digital-Umsetzer 28-1 und 28-2 vorgesehen. Um bei der Digitalisierung der Messsignale einen Informationsverlust zu vermeiden, erfolgt eine Kombination der Messsignale jeweils zweier Sensoren 20-1 und 20-3 sowie 20-2 und 20-4 mittels entsprechender Differenzhaltungen 26-1 und 26-2. Im gezeigten Beispiel erfolgt dabei die paarweise Differenzbildung der Messsignale von Sensoren, welche jeweils ein invertiertes Signal ausgeben.

Konkret bildet die erste Differenzschaltung 26-1 das Differenzsignal zwischen dem PSIN-Signal des ersten Sensors 20-1 und dem NSIN-Signal des dritten Sensors (im Lichte der obigen Annahme der Sinus-förmigen Messsignale mit entsprechendem Phasenversatz). Die zweite Differenzschaltung 26-2 bildet das Differenzsignal zwischen dem PCOS-Signal des zweiten Sensors 20-2 und dem NCOS-Signal des vierten Sensors (im Lichte der obigen Annahme der Sinus-förmigen Messsignale mit entsprechendem Phasenversatz). Der vorgesehen Signaltauscher 30-1 übermittelt die beiden erhaltenen Differenzsignale dann mit einer variierenden Verteilung an die beiden Analog-Digital-Umsetzern 28-1 und 28-2. Die Differenzbildung erlaubt die Reduktion der Zahl der vorzusehenden Analog-Digital-Umsetzer 28-1 bis 28-2 bei einer weiterhin hohen Auflösung der Relativposition zwischen den beiden Teilen 14 und 18.

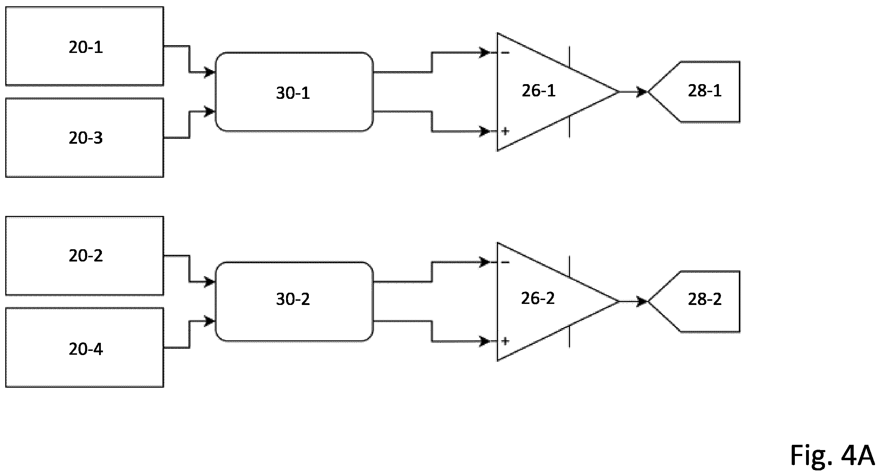

Wie in Fig. 4A gezeigt ist, können den Differenzschaltungen 26-1 und 26-2 alternativ auch entsprechende Signaltauscher 30-1 und 30-2 vorgeschaltet sein.

Hierbei erfolgt dann eine Variation der Übermittlung der Messsignale der jeweiligen Sensoren 20-1 und 20-3 bzw. 20-2 und 20-4 auf die unterschiedlichen Eingänge der zugehörigen Differenzschaltung 26-1 bzw. 26-2. Dies ermöglicht die Identifizierung von Fehlern innerhalb der Differenzschaltungen 26-1 und 26-2, ähnlich wie dies oben für die Analog-Digital-Umsetzer 28-1 bis 28-4 beschrieben wurde.

Um bei einer derartigen Ausgestaltung auch einen Fehler in den beiden nachgeschalteten Analog-Digital-Umsetzern 28-1 und 28-2 identifizieren und/oder ausgleichen zu können, kann zwischen den beiden Differenzschaltungen 26-1 und 26-2 und den beiden Analog-Digital-Umsetzern 28-1 und 28-2 ein weiterer Signaltauscher (nicht dargestellt) vorgesehen sein, welcher die Verteilung der Differenzsignale als Messsignale auf die beiden Analog-Digital-Umsetzer 28-1 und 28-2 variiert.

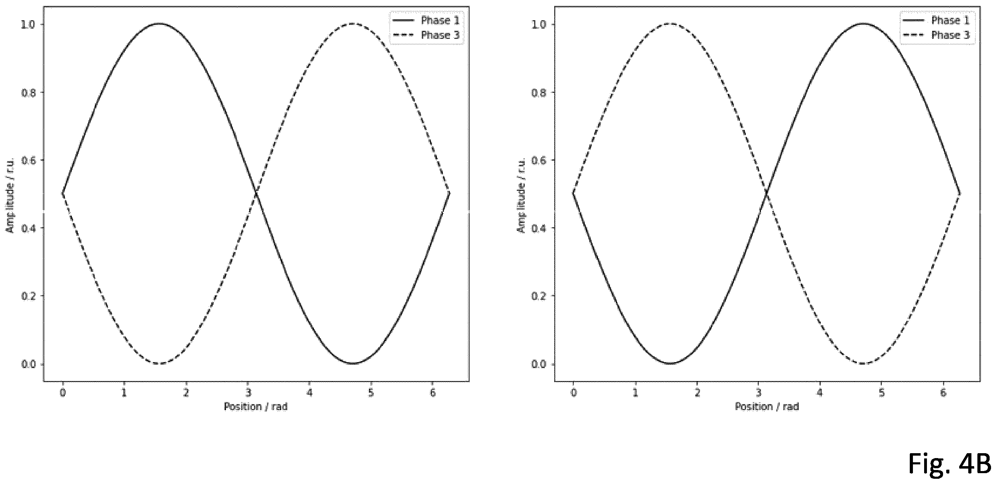

Fig. 4B zeigt für die Ausgestaltung der Fig. 4A und den beispielhaft beschrieben Fall von Sinus-förmigen Messsignalen der Sensoren 20-1 bis 20-4 die Verteilung des PSIN-Signals des ersten Sensors 20-1 und des NSIN-Signals des dritten Sensors 20-3 auf die beiden Eingänge der ersten Differenzschaltung 26-1 (angezeigt durch die Linienart der jeweiligen Signalkurven) bei einer ersten Verteilung (links) und bei einer hiervon verschiedenen zweiten Verteilung (rechts). Konkret leitet der erste Signaltauscher 30-1 im linken Fall das PSIN-Signal des ersten Sensors 20-1 an den ersten Eingang der ersten Differenzschaltung 26-1 und das NSIN-Signal des dritten Sensors 20-3 an den zweiten Eingang der ersten Differenzschaltung 26-1 weiter. Im rechten Fall leitet der erste Signaltauscher 30-1 das PSIN-Signal des ersten Sensors 20-1 an den zweiten Eingang der ersten Differenzschaltung 26-1 und das NSIN-Signal des dritten Sensors 20-3 an den ersten Eingang der ersten Differenzschaltung 26-1 weiter. Das bedeutet beispielsweise, dass die erste Differenzschaltung 26-1 im linken Fall das NSIN-Signal des dritten Sensors 20-3 von dem PSIN-Signal des ersten Sensors 20-1 subtrahiert und an den ersten Analog-Digital-Umsetzer 28-1 ausgibt. Im rechten Fall subtrahiert die erste Differenzschaltung 26-1 dann das PSIN-Signal des ersten Sensors 20-1 von dem NSIN-Signal des dritten Sensors 20-3 und gibt diese Differenz an den ersten Analog-Digital-Umsetzer 28-1 aus.

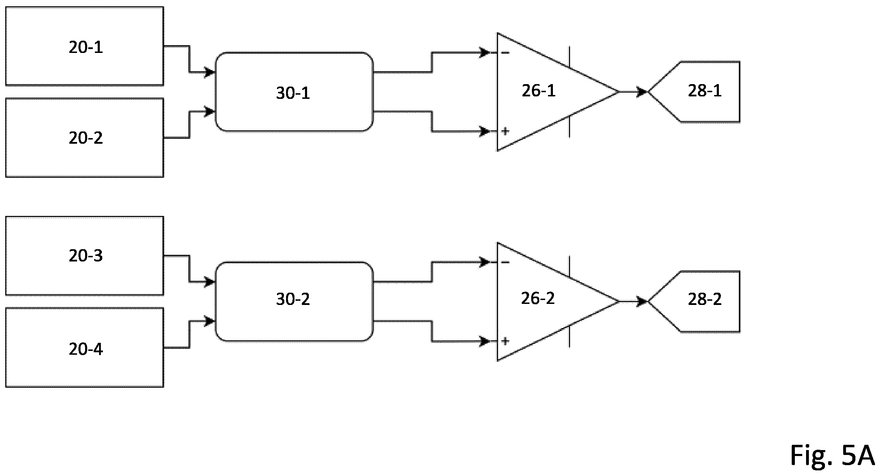

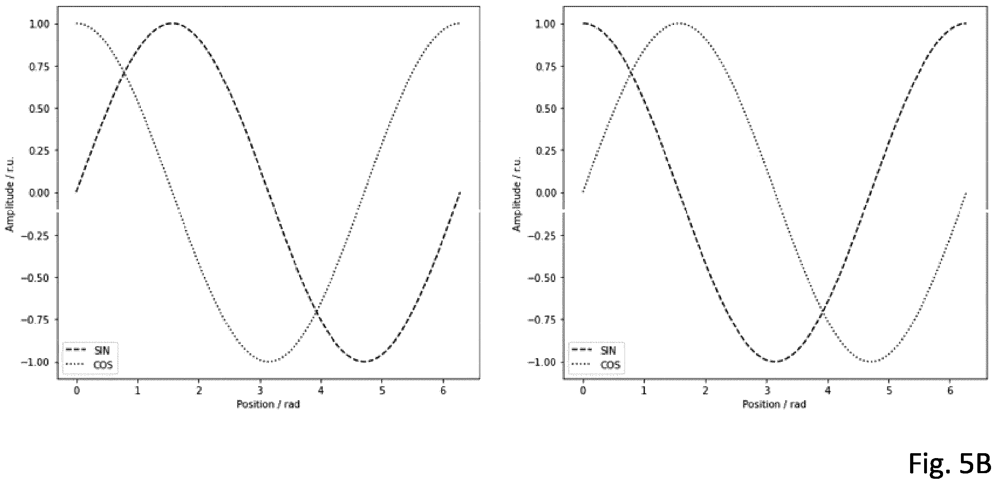

Anstatt, wie in den Figuren 4A und 4B gezeigt ist, die Vertauschung von zueinander "inversen" Messsignalen (also Messsignalen mit einem Phasenversatz von 180°) vorzunehmen, können auch Messsignale mit anderen relativen Phasenversätzen vertauscht werden. Beispielsweise können entsprechend den Figuren 5A und 5B Messsignale mit einem Phasenversatz von 90° miteinander vertauscht werden.

Hierfür sind entgegen der Ausgestaltung der Fig. 4A nicht der erste und der dritte Sensor 20-1 bzw. 20-3 mit dem ersten Signaltauscher 30-1 gekoppelt, sondern der erste und der zweite Sensor 20-1 bzw. 20-2. Entsprechend sind dann auch nicht der zweiter und der vierte Sensor 20-2 bzw. 20-4 mit dem zweiten Signaltauscher 30-1 gekoppelt, sondern der dritte und der vierte Sensor 20-3 bzw. 20-4. Je nach Verteilung des PSIN-Signals des ersten Sensors 20-1 und des PCOS-Signals des zweiten Sensors 20-2 auf die beiden Eingänge der ersten Differenzschaltung 26-1 durch den ersten Signaltauscher 30-1 ergeben sich dann die beiden in Fig. 4b gezeigten Signalverläufen an der ersten Differenzschaltung 26-1.

Anstelle der beiden Differenzschaltungen 26-1 und 26-2 können beispielsweise auch analoge Divisionsschaltungen vorgesehen sein, welche keine Differenz der Eingangssignale ausgeben, sondern einen Quotienten dieser. Natürlich sind auch andere analoge Verschaltungen zwischen zwei oder mehr Messsignalen, vor oder nach vorgesehenen Signaltauschern 30-1 bzw. 30-2 möglich.

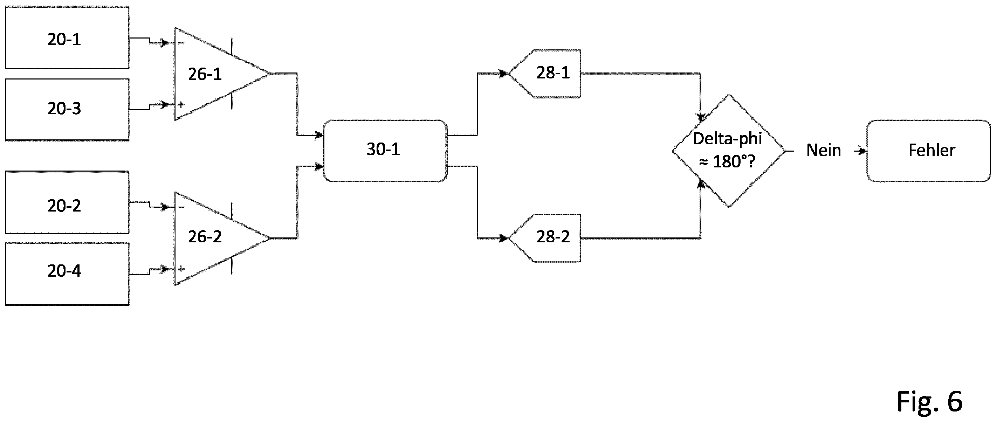

Fig. 6 zeigt eine erste beispielhafte funktionelle Weiterbildung der erfindungsgemäßen Vorrichtung anhand der strukturellen Ausgestaltung von Fig. 3.

Die Auswert- und Steuereinheit 24 kann dazu ausgebildet sein, zwei digitalisierte Messsignale miteinander abzugleichen und auf einen Phasenversatz zwischen diesen beiden hin zu untersuchen. Liegt ein erkannter Phasenversatz "Delta-phi" nicht in einem vorgegebenen Bereich, in der Ausgestaltung der Fig. 3 beispielsweise bei etwa 180°, erkennt die Auswert- und Steuereinheit 24, dass ein Fehler vorliegt, und gibt ein entsprechendes Fehlersignal aus. Ergänzend dazu kann eine weitere Fehleranalyse gestartet werden und ggf. eine Korrektur der digitalisierten Messsignale bzw. Messwerte erfolgen, bevor diese zur Ermittlung der Relativposition zwischen den beiden Teilen 14 und 18 herangezogen werden.

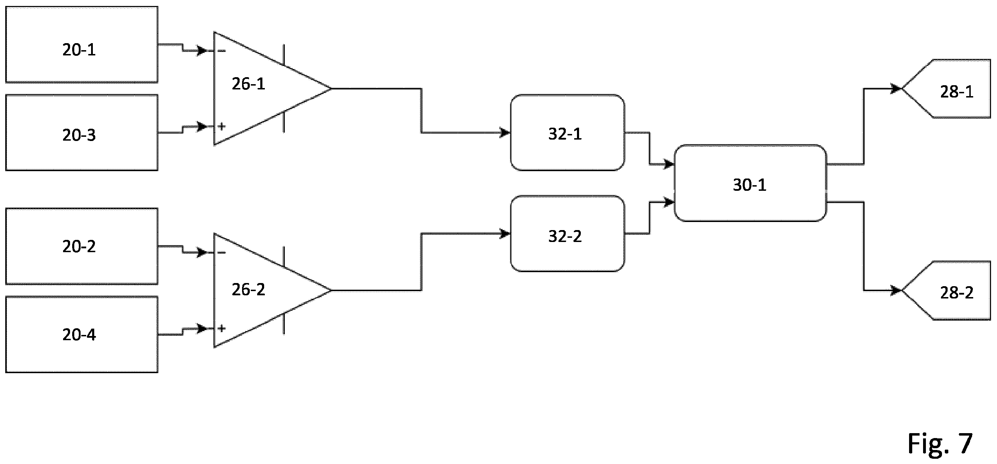

Wie ferner in Fig. 7 gezeigt ist, können den vorgesehenen Signaltauschern 30-1 auch Abtast-Halte-Schaltungen 32-1 und 32-2 vorgeschaltet sein. Dies ermöglicht Ausgestaltungen, in welchen einzelne Messwerte der Messsignale durch den entsprechenden Signaltauscher 30-1 nicht nur an eine der nachgeschalteten Komponenten übermittelt werden können, sondern an eine Mehrzahl, insbesondere an alle der nachgeschalteten Komponenten und/oder Anschlüsse. Dies ermöglicht den unmittelbaren Abgleich der digitalisierten Messsignale und einer erleichterte direkte Fehleridentifizierung und ggf. Korrektur. Entsprechende Abtast-Halte-Schaltungen 32-1 und 32-2 können auch in die vorgesehenen Signaltauscher 30-1 integriert sein.

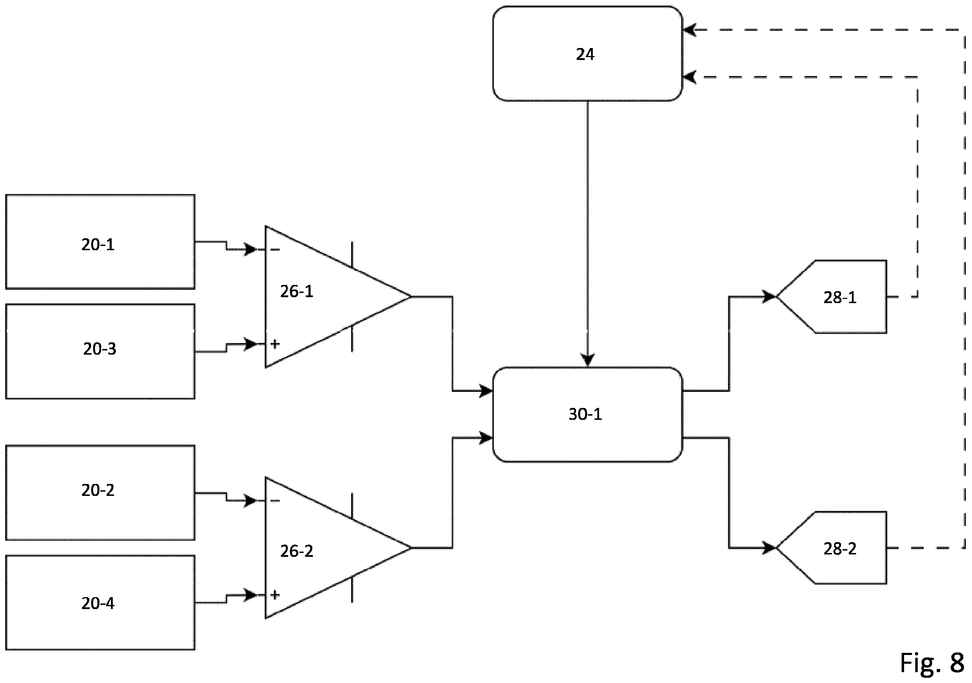

Fig. 8 zeigt schließlich, dass die Auswert- und Steuereinheit 24 nicht nur passiv über die vorgesehenen Analog-Digital-Umsetzer 28-1 bis 28-8 mit dem wenigstens einen Signaltauscher 30-1 bzw. 30-2 verbunden sein muss, sondern mit diesem bzw. diesen direkt verbunden sein kann. Diese Verbindung kann zum passiven Erhalt von Informationen zu den Zeitpunkten der Variation der Verteilung wie auch zur aktiven Steuerung der Signaltauscher 30-1 und 30-2 ausgebildet sein. Beispielsweise kann die Auswert- und Steuereinheit 24 aktiv eine Frequenz der Variation der Signalverteilung, insbesondere kontinuierlich, variieren sowie auf separate Anforderung (wie eine Benutzereingabe) hin und/oder als Reaktion auf die Erkennung bestimmter Randbedingungen (wie der Überschreitung eines Schwellenwerts) hin, eine (ggf. spezifische) Variation der Signalverteilung vornehmen lassen.

Die Vorrichtung 10 kann entsprechend der obigen Beschreibung zur optischen Überwachung der Relativbewegung mittels optischer Sensoren 20-1 bis 20-8 und einer entsprechenden Codierung 12 ausgebildet sein. Alternativ dazu gibt es natürlich auf die Möglichkeit der Umsetzung einer kapazitativen, induktiven oder magnetischen Überwachung.

Auch sei darauf hingewiesen, dass die elektrischen Komponenten der beschriebenen Vorrichtung 10 bevorzugt auf einem einzelnen integrierten Schaltkreis vorgesehen sind.

Abschließen sei noch darauf hingewiesen, dass die vorliegende Erfindung auch ein entsprechendes Verfahren zur Positions-, Längen, oder Winkelbestimmung betrifft.

### Bezugszeichenliste

- 10: Vorrichtung zur Positions-, Längen-, oder Winkelbestimmung
- 12: Codierung
- 14: erster Teil
- 16: Auslesevorrichtung
- 18: zweiter Teil
- 20-1 bis 20-8: Sensoren
- 22-0 bis 22-9: Codeabschnitte
- 24: Auswert- und Steuereinheit
- 26-1 und 26-2: Differenzschaltungen
- 28-1 bis 28-3: Digital-Analog-Umsetzer
- 30-1 und 30-2: Signaltauscher
- 32-1 und 32-2: Abtast-Halte-Schaltungen

## Patentansprüche

1. Vorrichtung (10) zur Positions-, Längen-, oder Winkelbestimmung, umfassend:
- einen ersten und einen zweiten Teil (14, 18), welche relativ zueinander bewegbar sind;
- eine an dem ersten Teil (14) angebrachte Codierung (12) mit einer Vielzahl von Codeabschnitten (22) erster und zweiter Art;
- eine an dem zweiten Teil (18) angebrachte Auslesevorrichtung (16) zur Erfassung zumindest eines Teils der Codierung (12), wobei die Auslesevorrichtung (16) wenigstens zwei Sensoren (20-1 bis 20-8) umfasst, welche jeweils zur Erfassung der einzelnen Codeabschnitte (22-0 bis 22-9) und zur Ausgabe eines entsprechenden analogen Messsignals ausgebildet sind;
- wenigstens zwei Analog-Digital-Umsetzer (28-1 bis 28-8), welche zumindest mittelbar mit den vorgesehenen Sensoren (20-1 bis 20-8) verbunden und dazu ausgebildet sind, die Messsignale zu digitalisieren und auszugeben; und
- eine Auswert- und Steuereinheit (24), welche dazu ausgebildet ist, aus den digitalisierten Messsignalen eine Relativposition zwischen dem ersten und dem zweiten Teil (14, 18) zu ermitteln;
wobei zwischen den Sensoren (20-1 bis 20-8) und den Analog-Digital-Umsetzern (28-1 bis 28-8) wenigstens ein Signaltauscher (30-1, 30-2) vorgesehen ist, welcher dazu ausgebildet ist, die Verteilung der eingehenden Messsignale von den einzelnen Sensoren (20-1 bis 20-8) auf unterschiedliche Ausgänge des Signaltauschers (30-1, 30-2) wiederholt zu variieren;
**dadurch gekennzeichnet, dass**
die Auswert- und Steuereinheit (24) mit wenigstens einem Signaltauscher (30-1, 30-2) verbunden und dazu ausgebildet ist, die hierdurch vorgenommenen Variation der Signalverteilung bei der Auswertung der digitalisierten Messsignale zu berücksichtigen sowie rückgängig zu machen, sowie anhand der digitalisierten Messsignale zu ermitteln, ob und welche der dem bzw. den Signaltauschern nachgeschalteten Komponenten fehlerhaft ist, und ein entsprechendes Fehlersignal auszugeben.

2. Vorrichtung (10) nach einem der vorhergehenden Ansprüche,
**dadurch gekennzeichnet, dass**
es sich bei der Codierung (12) um eine periodische Codierung, insbesondere um eine Inkrementalcodierung aus sich abwechselnd angeordneten Codeabschnitten erster und zweiter Art, handelt.

3. Vorrichtung (10) nach dem vorhergehenden Anspruch 2,
**dadurch gekennzeichnet, dass**
der wenigstens eine Signaltauscher (30-1, 30-2) dazu ausgebildet ist, spätestens jeden zehnten, bevorzugt jeden einzelnen, und insbesondere mehrmals pro Periodendurchlauf eines Messsignals die Verteilung der Messsignale der einzelnen Sensoren (20-1 bis 20-8) zu variieren.

4. Vorrichtung (10) nach dem vorhergehenden Anspruch,
**dadurch gekennzeichnet, dass**
die Sensoren (20-1 bis 20-8) und die Codierung (12) derart aufeinander abgestimmt sind, dass die erzeugten Messsignale einem im Wesentlichen Sinus- bzw. Kosinus-förmigen Verlauf folgen.

5. Vorrichtung (10) nach einem der vorhergehenden Ansprüche,
**dadurch gekennzeichnet, dass**
die Vorrichtung (10) derart ausgebildet ist, dass wenigstens einer, insbesondere alle, der Signaltauscher (30-1, 30-2) lediglich die Verteilung der Messsignale von Sensoren (20-1 bis 20-8) variiert, deren Messwerte, bis auf einzelne Ausnahmen, voneinander verschieden sind,
wobei die Vorrichtung (10) insbesondere derart ausgebildet ist, dass der besagte Signaltauscher (30-1, 30-2) lediglich periodische Signale miteinander vertauscht, zwischen welchen lediglich ein Phasenversatz, insbesondere von 30°, 45°, 90°, 120° oder bevorzugt von 180°, besteht.

6. Vorrichtung (10) nach einem der vorhergehenden Ansprüche,
**dadurch gekennzeichnet, dass**
zwischen wenigstens einem Paar von Sensoren (20-1 bis 20-8) und wenigstens einem der nachfolgenden Signaltauscher (30-1, 30-2) eine Differenzschaltung (26-1, 26-2) vorgesehen ist, und/oder zwischen wenigstens einem Signaltauscher (30-1, 30-2) und wenigstens einem der nachfolgenden Analog-Digital-Umsetzer (28-1 bis 28-8) eine Differenzschaltung (26-1, 26-2) vorgesehen ist.

7. Vorrichtung (10) nach einem der vorhergehenden Ansprüche,
**dadurch gekennzeichnet, dass**
es sich bei wenigstens einem, insbesondere bei allen, der besagten Signaltauscher (10) um Multiplexer oder Koppelfelder handelt.

8. Vorrichtung (10) nach einem der vorhergehenden Ansprüche,
**dadurch gekennzeichnet, dass**
wenigstens einer, insbesondere alle, der besagten Signaltauscher (30-1, 30-2) zum wiederholten Vertauschen von genau zwei oder vier Signalen ausgebildet sind.

9. Vorrichtung (10) nach einem der vorhergehenden Ansprüche,
**dadurch gekennzeichnet, dass**
die Auswert- und Steuereinheit (24) dazu ausgebildet ist, kontinuierlich den Betrieb des wenigstens einen Signaltauschers (30-1, 30-2) zu steuern.

10. Vorrichtung (10) nach einem der vorhergehenden Ansprüche,
**dadurch gekennzeichnet, dass**
wenigstens eine Abtast-Halte-Schaltung (32-1, 32-2) vorgesehen und derart ausgestaltet ist, dass ein Signaltauscher (30-1, 30-2) jeden zu verteilenden Messwert an wenigstens zwei unterschiedliche nachgeschaltete Komponenten ausgeben kann,
wobei insbesondere wenigstens eine Abtast-Halte-Schaltung (32-1, 32-2) dem entsprechenden Signaltauscher (30-1, 30-2) vorgeschaltet ist oder in diesen integriert ist.

11. Vorrichtung (10) nach einem der vorhergehenden Ansprüche,
**dadurch gekennzeichnet, dass**
die Vorrichtung (10) derart ausgebildet ist, dass wenigstens einer, insbesondere alle, der besagten Signaltauscher (30-1, 30-2) die Verteilung der Messsignale bei einer festen vorgegebenen Frequenz, auf separate Anforderung hin und/oder automatisch als Reaktion auf die Erkennung bestimmter Randbedingungen hin variieren.

12. Vorrichtung (10) nach einem der vorhergehenden Ansprüche,
**dadurch gekennzeichnet, dass**
es sich bei den Sensoren (20-1 bis 20-8) um optische, kapazitive, induktive oder magnetische Sensoren handelt.

13. Vorrichtung (10) nach einem der vorhergehenden Ansprüche,
**dadurch gekennzeichnet, dass**
die vorgesehenen Sensoren (20-1 bis 20-8), Signaltauscher (30-1, 30-2) und/oder Digital-Analog-Umsetzer (26-1 bis 26-8), sowie insbesondere auch die Auswert- und Steuereinheit (24), auf einem einzelnen integrierten Schaltkreis vorgesehen sind.

14. Verfahren zur Positions-, Längen-, oder Winkelbestimmung, insbesondere in einer Vorrichtung (10) nach einem der vorhergehenden Ansprüche, wobei das Verfahren die folgenden Schritte umfasst:
Bewegung eines ersten Teils (14) mit einer daran angebrachten Codierung (12) mit einer Vielzahl von Codeabschnitten (22) erster und zweiter Art, und eines zweiten Teils (18) mit einer daran angebrachten Auslesevorrichtung (16) zur Erfassung zumindest eines Teils der Codierung (12) relativ zueinander;
Erfassung der einzelnen Codeabschnitte (22-0 bis 22-9) mittels wenigstens zweier Sensoren (20-1 bis 20-8) der Auslesevorrichtung (16) und Ausgabe entsprechender analoger Messsignale;
Digitalisierung der Messsignale mittels wenigstens zweier Analog-Digital-Umsetzern (28-1 bis 28-8), welche zumindest mittelbar mit den vorgesehenen Sensoren (20-1 bis 20-8) verbunden sind, und Ausgabe der digitalisierten Messsignale;
Ermittlung einer Relativposition zwischen dem ersten und dem zweiten Teil (14, 18) aus den digitalisierten Messsignalen;
die wiederholte Variation der Verteilung der eingehenden Messsignale von den einzelnen Sensoren (20-1 bis 20-8) an einem Signaltauscher (30-1, 30-2) auf unterschiedliche Ausgänge des Signaltauschers (30-1, 30-2);
**gekennzeichnet durch**
die Berücksichtigung der vorgenommenen Variation der Signalverteilung und Rückgängigmachung dieser bei der Auswertung der digitalisierten Messsignale;
die Ermittlung ob und welche der dem bzw. den Signaltauschern nachgeschalteten Komponenten fehlerhaft sind anhand der digitalisierten Messsignale; und
die Ausgabe eines entsprechenden Fehlersignals.

## Claims

1. An apparatus (10) for position, length or angle determination, comprising:
- a first and a second part (14, 18) which are movable relative to one another;
- a coding (12) which is applied to the first part (14) and which has a plurality of code sections (22) of a first and a second kind;
- a readout apparatus (16), which is attached to the second part (18), for detecting at least one part of the coding (12), wherein the readout apparatus (16) comprises at least two sensors (20-1 to 20-8) which are each configured to detect the individual code sections (22-0 to 22-9) and to output a corresponding analog measurement signal;
- at least two analog-to-digital converters (28-1 to 28-8) which are at least indirectly connected to the provided sensors (20-1 to 20-8) and which are configured to digitize and to output the measurement signals; and
- an evaluation and control unit (24) which is configured to determine a relative position between the first and the second part (14, 18) from the digitized measurement signals,
wherein at least one signal exchanger (30-1, 30-2) is provided between the sensors (20-1 to 20-8) and the analog-to-digital converters (28-1 to 28-8) and is configured to repeatedly vary the distribution of the incoming measurement signals from the individual sensors (20-1 to 20-8) to different outputs of the signal exchanger (30-1, 30-2);
**characterized in that**
the evaluation and control unit (24) is connected to at least one signal exchanger (30-1, 30-2) and is configured to consider the hereby performed variation of the signal distribution in the evaluation of the digitized measurement signals and to reverse said variation, and to determine whether and which of the components connected downstream of the signal exchanger(s) is faulty based on the digitized measurement signals, and to output a corresponding error signal.

2. An apparatus (10) according to one of the preceding claims, **characterized in that**
the coding (12) is a periodic coding, in particular an incremental coding composed of alternately arranged code sections of a first and a second kind.

3. An apparatus (10) according to the preceding claim 2,
**characterized in that**
the at least one signal exchanger (30-1, 30-2) is configured to vary the distribution of the measurement signals of the individual sensors (20-1 to 20-8) at least every tenth period cycle, preferably every single period cycle, and in particular several times per period cycle of a measurement signal.

4. An apparatus (10) according to the preceding claim,
**characterized in that**
the sensors (20-1 to 20-8) and the coding (12) are matched to one another such that the generated measurement signals follow a substantially sine-shaped or cosine-shaped curve.

5. An apparatus (10) according to any one of the preceding claims, **characterized in that**
the apparatus (10) is configured such that at least one, in particular all, of the signal exchangers (30-1, 30-2) only vary the distribution of the measurement signals from sensors (20-1 to 20-8) whose measurement values, with individual exceptions, are different from one another, wherein the apparatus (10) is in particular configured such that said signal exchanger (30-1, 30-2) only exchanges periodic signals with one another between which there is only one phase offset, in particular of 30°, 45°, 90°, 120° or preferably of 180°.

6. An apparatus (10) according to any one of the preceding claims, **characterized in that**
a differential circuit (26-1, 26-2) is provided between at least one pair of sensors (20-1 to 20-8) and at least one of the following signal exchangers (30-1, 30-2), and/or
a differential circuit (26-1, 26-2) is provided between at least one signal exchanger (30-1, 30-2) and at least one of the following analog-to-digital converters (28-1 to 28-8).

7. An apparatus (10) according to any one of the preceding claims, **characterized in that**
at least one, in particular all, of said signal exchangers (10) are multiplexers or coupling fields.

8. An apparatus (10) according to any one of the preceding claims, **characterized in that**
at least one, in particular all, of said signal exchangers (30-1, 30-2) are configured to repeatedly exchange exactly two or four signals.

9. An apparatus (10) according to any one of the preceding claims, **characterized in that**
the evaluation and control unit (24) is configured to continuously control the operation of the at least one signal exchanger (30-1, 30-2).

10. An apparatus (10) according to any one of the preceding claims, **characterized in that**
at least one sample-and-hold circuit (32-1, 32-2) is provided and is designed such that a signal exchanger (30-1, 30-2) can output each measurement value to be distributed to at least two different components connected downstream,
wherein in particular at least one sample-and-hold circuit (32-1, 32-2) is connected upstream of the corresponding signal exchanger (30-1, 30-2) or is integrated therein.

11. An apparatus (10) according to any one of the preceding claims, **characterized in that**
the apparatus (10) is configured such that at least one, in particular all, of said signal exchangers (30-1, 30-2) vary the distribution of the measurement signals at a fixed predefined frequency, upon separate request and/or automatically in response to the recognition of certain boundary conditions.

12. An apparatus (10) according to any one of the preceding claims, **characterized in that**
the sensors (20-1 to 20-8) are optical, capacitive, inductive or magnetic sensors.

13. An apparatus (10) according to any one of the preceding claims, **characterized in that**
the provided sensors (20-1 to 20-8), signal exchangers (30-1, 30-2) and/or digital-to-analog converters (26-1 to 26-8), and in particular also the evaluation and control unit (24), are provided on a single integrated circuit.

14. A method for position, length or angle determination, in particular in an apparatus (10) according to any one of the preceding claims, wherein the method comprises the following steps:
moving a first part (14) with a coding (12) applied thereto, which has a plurality of code sections (22) of a first and a second kind, and moving a second part (18) with a readout apparatus (16) attached thereto for detecting at least one part of the coding (12) relative to one another;
detecting the individual code sections (22-0 to 22-9) by means of at least two sensors (20-1 to 20-8) of the readout apparatus (16) and outputting corresponding analog measurement signals;
digitizing the measurement signals by means of at least two analog-to-digital converters (28-1 to 28-8), which are at least indirectly connected to the provided sensors (20-1 to 20-8), and outputting the digitized measurement signals;
determining a relative position between the first and the second part (14, 18) from the digitized measurement signals;
repeatedly varying the distribution of the incoming measurement signals from the individual sensors (20-1 to 20-8) at a signal exchanger (30-1, 30-2) to different outputs of the signal exchanger (30-1, 30-2);
**characterized by**
the consideration of the performed variation of the signal distribution and the reversing thereof in the evaluation of the digitized measurement signals; the determination whether and which of the components connected downstream of the signal exchanger(s) are faulty based on the digitized measurement signals; and
the outputting of a corresponding error signal.

## Revendications

1. Dispositif (10) de détermination de la position, de la longueur ou de l'angle, comprenant :
- une première et une seconde partie (14, 18), qui sont mobiles l'une par rapport à l'autre,
- un codage (12) fixé à la première partie (14) et comportant une pluralité de sections de code (22) d'un premier et d'un second type ;
- un dispositif de lecture (16) fixé à la seconde partie (18) et destiné à détecter au moins une partie du codage (12), le dispositif de lecture (16) comprenant au moins deux capteurs (20-1 à 20-8) qui sont chacun conçus pour détecter les sections de code individuelles (22-0 à 22-9) et pour émettre un signal de mesure analogique correspondant ;
- au moins deux convertisseurs analogiques-numériques (28-1 à 28-8) connectés au moins indirectement aux capteurs prévus (20-1 à 20-8) et conçus pour numériser et émettre les signaux de mesure ; et
- une unité d'évaluation et de commande (24) conçue pour déterminer, à partir des signaux de mesure numérisés, une position relative entre la première et la seconde partie (14, 18) ;
au moins un échangeur de signaux (30-1, 30-2) étant prévu entre les capteurs (20-1 à 20-8) et les convertisseurs analogiques-numériques (28-1 à 28-8), lequel est conçu pour faire varier de manière répétée la distribution des signaux de mesure entrants, provenant des capteurs individuels (20-1 à 20-8), à différentes sorties de l'échangeur de signaux (30-1, 30-2) ; **caractérisé en ce que**
l'unité d'évaluation et de commande (24) est connectée à au moins un échangeur de signaux (30-1, 30-2) et est conçue pour prendre en compte, lors de l'évaluation des signaux de mesure numérisés, la variation ainsi effectuée dans la distribution des signaux et pour l'annuler, ainsi que pour déterminer, à l'aide des signaux de mesure numérisés, si et quel des composants situés en aval du ou des échangeurs de signaux est défectueux, et pour émettre un signal d'erreur correspondant.

2. Dispositif (10) selon l'une des revendications précédentes,
**caractérisé en ce que**
le codage (12) est un codage périodique, en particulier un codage incrémental composé de sections de code de premier et second types disposées en alternance.

3. Dispositif (10) selon la revendication précédente 2,
**caractérisé en ce que**
ledit au moins un échangeur de signaux (30-1, 30-2) est conçu pour faire varier la distribution des signaux de mesure des capteurs individuels (20-1 à 20-8) au plus tard tous les dix signaux de mesure, de préférence à chaque signal de mesure, et en particulier plusieurs fois par cycle périodique d'un signal de mesure.

4. Dispositif (10) selon la revendication précédente,
**caractérisé en ce que**
les capteurs (20-1 à 20-8) et le codage (12) sont coordonnés de telle sorte que les signaux de mesure générés suivent une courbe sensiblement sinusoïdale ou cosinusoïdale.

5. Dispositif (10) selon l'une des revendications précédentes,
**caractérisé en ce que**
le dispositif (10) est conçu de telle sorte que l'un au moins, en particulier tous les échangeurs de signaux (30-1, 30-2), font varier uniquement la distribution des signaux de mesure des capteurs (20-1 à 20-8) dont les valeurs de mesure, à quelques exceptions près, sont différentes les unes des autres,
en particulier, le dispositif (10) est conçu de telle sorte que ledit échangeur de signaux (30-1, 30-2) échange uniquement des signaux périodiques entre lesquels il n'existe qu'un déphasage, notamment de 30°, 45°, 90°, 120° ou de préférence de 180°.

6. Dispositif (10) selon l'une des revendications précédentes,
**caractérisé en ce qu'**un circuit différentiel (26-1, 26-2) est prévu entre au moins une paire de capteurs (20-1 à 20-8) et l'un au moins des échangeurs de signaux (30-1, 30-2) suivants, et/ou
un circuit différentiel (26-1, 26-2) est prévu entre au moins un échangeur de signaux (30-1, 30-2) et l'un au moins des convertisseurs analogiques-numériques (28-1 à 28-8) suivants.

7. Dispositif (10) selon l'une des revendications précédentes,
**caractérisé en ce que**
au moins un, en particulier tous lesdits échangeurs de signaux (10) sont des multiplexeurs ou des matrices de commutation.

8. Dispositif (10) selon l'une des revendications précédentes,
**caractérisé en ce que**
au moins un, en particulier tous lesdits échangeurs de signaux (30-1, 30-2) sont conçus pour échanger de manière répétée exactement deux ou quatre signaux.

9. Dispositif (10) selon l'une des revendications précédentes,
**caractérisé en ce que**
l'unité d'évaluation et de commande (24) est conçue pour commander en continu le fonctionnement dudit au moins un échangeur de signaux (30-1, 30-2).

10. Dispositif (10) selon l'une des revendications précédentes,
**caractérisé en ce que**
au moins un circuit d'échantillonnage et de maintien (32-1, 32-2) est prévu et conçu de telle sorte qu'un échangeur de signaux (30-1, 30-2) peut émettre chaque valeur de mesure à distribuer vers au moins deux composants différents montés en aval,
en particulier, au moins un circuit d'échantillonnage et de maintien (32-1, 32-2) est monté en amont de l'échangeur de signaux correspondant (30-1, 30-2) ou est intégré dans celui-ci.

11. Dispositif (10) selon l'une des revendications précédentes,
**caractérisé en ce que**
le dispositif (10) est conçu de telle sorte qu'au moins un, en particulier tous lesdits échangeurs de signaux (30-1, 30-2) font varier la distribution des signaux de mesure à une fréquence fixe prédéterminée, sur demande séparée et/ou automatiquement en réaction à la détection de certaines conditions limites.

12. Dispositif (10) selon l'une des revendications précédentes,
**caractérisé en ce que**
les capteurs (20-1 à 20-8) sont des capteurs optiques, capacitifs, inductifs ou magnétiques.

13. Dispositif (10) selon l'une des revendications précédentes,
**caractérisé en ce que**
les capteurs prévus (20-1 à 20-8), les échangeurs de signaux (30-1, 30-2) et/ou les convertisseurs numériques-analogiques (26-1 à 26-8), ainsi que, en particulier, l'unité d'évaluation et de commande (24), sont prévus sur un circuit intégré unique.

14. Procédé de détermination de la position, de la longueur ou de l'angle, en particulier dans un dispositif (10) selon l'une des revendications précédentes, le procédé comprenant les étapes suivantes consistant à:
déplacer l'une par rapport à l'autre une première partie (14) à laquelle est fixé un codage (12) comportant une pluralité de sections de code (22) d'un premier et d'un second type, et une seconde partie (18) à laquelle est fixé un dispositif de lecture (16) pour détecter au moins une partie du codage (12) ;
détecter les sections de code individuelles (22-0 à 22-9) au moyen d'au moins deux capteurs (20-1 à 20-8) du dispositif de lecture (16), et émettre des signaux de mesure analogiques correspondants ;
numériser les signaux de mesure à l'aide d'au moins deux convertisseurs analogiques-numériques (28-1 à 28-8) qui sont connectés au moins indirectement aux capteurs prévus (20-1 à 20-8), et émettre les signaux de mesure numérisés ;
déterminer une position relative entre la première et la seconde partie (14, 18) à partir des signaux de mesure numérisés ;
faire varier de façon répétée la distribution des signaux de mesure entrants, provenant des capteurs individuels (20-1 à 20-8), sur un échangeur de signaux (30-1, 30-2) à différentes sorties de l'échangeur de signaux (30-1, 30-2) ;
**caractérisé par**
la prise en compte de la variation effectuée dans la distribution des signaux et son annulation lors de l'évaluation des signaux de mesure numérisés ;
la détermination, à l'aide des signaux de mesure numérisés, si et quels des composants montés en aval du ou des échangeurs de signaux sont défectueux ; et
l'émission d'un signal d'erreur correspondant.
